# FASCICULE DE BREVET EUROPEEN

(11) **EP 1 596 342 B1**
(45) Date de publication et mention de la délivrance du brevet: **14.11.2007**
(21) Numéro de dépôt: 05290932.2
(22) Date de dépôt: 28.04.2005
(51) Int. Cl.: G07F 7/08, G07F 7/02, H04M 1/725, H04M 17/00

(54) **Procédé et dispositif de rechargement d'une carte à puce sans contact**
Verfahren und Einrichtung zum Nachladen einer kontaktlosen Chipkarte
Method and apparatus for recharging a contactless IC card

(30) Priorité: 05.05.2004 FR 0404847
(43) Date de publication de la demande: 16.11.2005
(73) Titulaire: Societé Française du Radiotéléphone, 75008 Paris (FR)
(72) Inventeur: Bensimon, Michael, 38100 Grenoble (FR); Caloud, Philippe, 38330 Saint Ismier (FR); Prunel, Nicolas, 38530 Barraux (FR)
(74) Mandataire: Debay, Yves

(56) Documents cités:
- WO-A-00/33264
- WO-A-01/75816
- WO-A-98/47112
- WO-A-02/071311

## Description

La présente invention concerne un procédé de rechargement d'une carte d'abonnement grâce à un équipement sans fil applicable notamment au domaine des télécommunications.

Il est connu dans l'art antérieur la large diffusion de l'usage des cartes à puce sans contact. Cette technologie se diffuse massivement entre autres dans les industries du transport et des loisirs. En effet, dans l'industrie du transport, les tickets magnétiques et les bornes mécaniques de compostage sont remplacés par des cartes à puce sans contact et des bornes adéquates. De même dans l'industrie des loisirs, les stations de ski se dotent d'une telle technologie afin de remplacer leurs forfaits. L'un des inconvénients majeurs de l'utilisation de telles cartes, est qu'elles nécessitent d'être rechargées assez régulièrement. Ce rechargement nécessite l'usage de moyens de paiement traditionnels tels que la carte bancaire ou le paiement en espèces.

Le domaine des télécommunications et plus particulièrement celui de la téléphonie sont de grands consommateurs de cartes rechargeables. C'est pourquoi les opérateurs de téléphonie proposent à leurs utilisateurs de nombreux procédés leur permettant de recharger leurs cartes.

Un premier procédé consiste en l'achat par l'utilisateur d'un coupon ou ticket recharge. Ce coupon se présente sous la forme d'une carte ou d'un ticket de papier sur lequel est inscrit le numéro de la recharge qu'il faut ensuite entrer dans son téléphone afin de recharger son crédit consommation.

Un second procédé consiste à recharger sa carte par le biais d'un distributeur automatique de billets. L'opération se déroule comme un simple retrait d'argent à l'exception près que le distributeur dispose d'une fonction permettant le rechargement des cartes de téléphonie, le compte du client est alors débité du montant de la recharge.

Un troisième procédé de rechargement consiste à créditer la carte en appelant un numéro spécial vers lequel les communications sont sécurisées, l'utilisateur fournit à l'opérateur son numéro de carte de crédit et choisit le montant à créditer.

Un autre procédé consiste en un prélèvement automatique mensuel sur le compte bancaire de l'utilisateur afin de créditer sa carte.

Diverses méthodes de rechargement représentatives de l'art connu sont mentionnées dans les documents WO 98/47112, WO 01/75816, WO 02/071311, WO 00/33264.

Tous ces procédés utilisent des moyens de paiement classiques et présentent chacun divers inconvénients pour l'utilisateur de la carte, bien qu'ils soient tous souples d'utilisation. En effet, les coupons de rechargement nécessitent que l'utilisateur saisisse un grand nombre de chiffres pour activer la recharge, ce qui engendre un risque d'erreur dans la saisie et l'obligation pour l'utilisateur de reprendre la saisie depuis le début. Les rechargements par carte bancaire nécessitent que l'utilisateur soit titulaire d'un compte ouvrant droit à la détention d'une carte de crédit ce qui limite l'accès à ce service. De plus, certains utilisateurs de cartes ne sont pas enclins à fournir le numéro de leur carte de crédit par téléphone bien que la communication pour ce genre de transaction soit hautement sécurisée. Enfin, le rechargement par prélèvement mensuel restreint la liberté de l'utilisateur dans son choix de recharger ou non sa carte.

La présente invention a pour but de pallier certains inconvénients de l'art antérieur en proposant un procédé de rechargement de cartes sans contact par un terminal mobile grâce à la combinaison des nouvelles capacités d'acquisition d'images que possèdent les terminaux mobiles, au travers des réseaux de télécommunication, des moyens d'interaction avec des cartes à puce sans contact permettant leur rechargement au travers d'une borne ainsi que des moyens d'interaction d'une borne avec une infrastructure de paiement.

Ce but est atteint par un procédé de rechargement d'une carte à puce sans contact selon la revendication indépendant 1.

Selon une autre particularité, l'invention est telle que définie dans les revendications 2 à 18.

D'autres particularités et avantages de la présente invention apparaîtront plus clairement à la lecture de la description ci-après, faite en référence aux dessins annexés, dans lesquels :

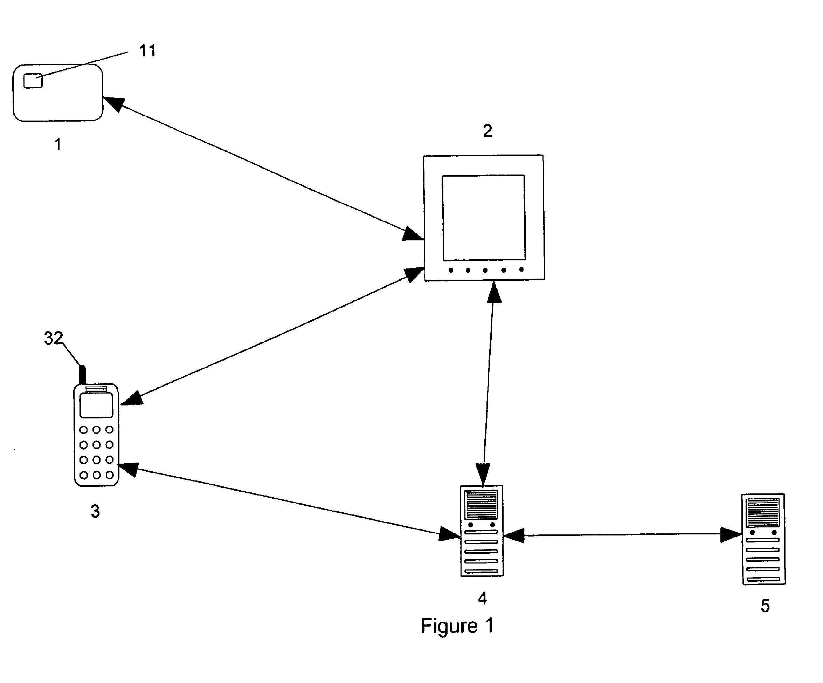

- la figure 1 représente un dispositif dans lequel le procédé selon l'invention peut être exécuté,

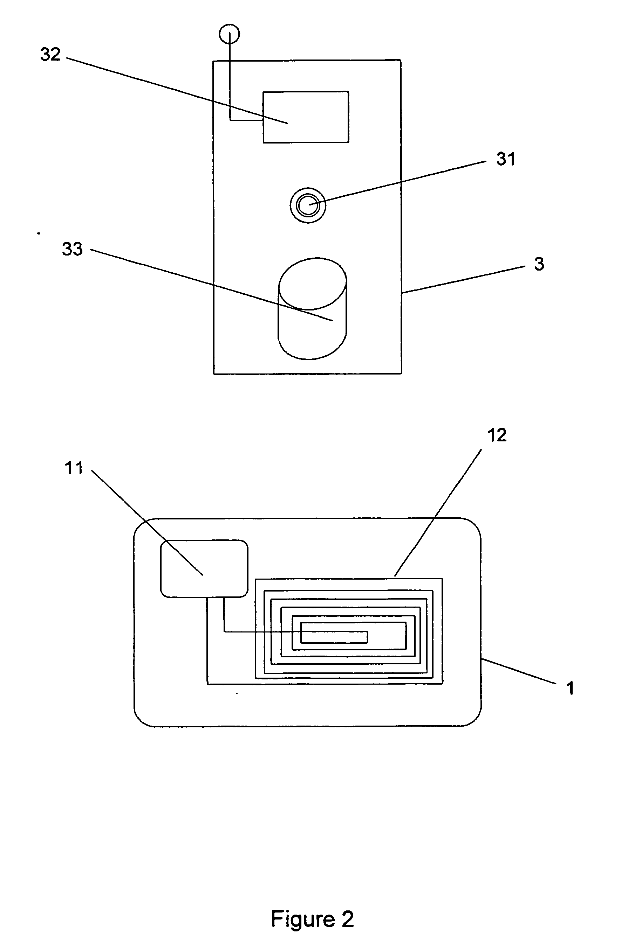

- la figure 2 représente les principaux constituants d'un terminal mobile et d'une carte à puce sans contact qui interviennent dans l'exécution du procédé de rechargement selon l'invention,

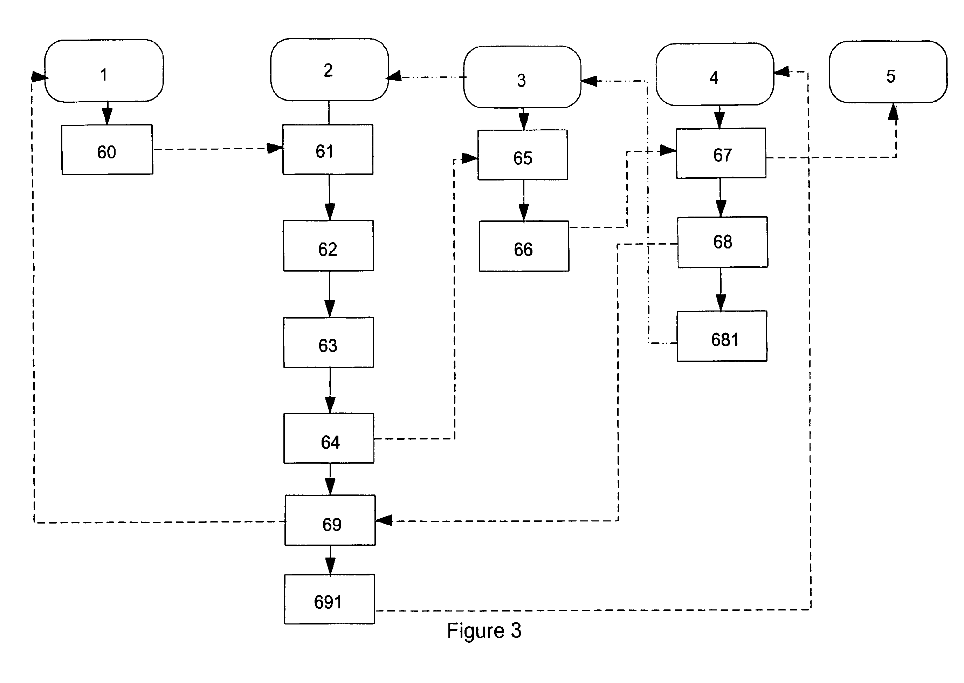

- la figure 3 représente un organigramme qui regroupe les étapes du procédé général selon l'invention,

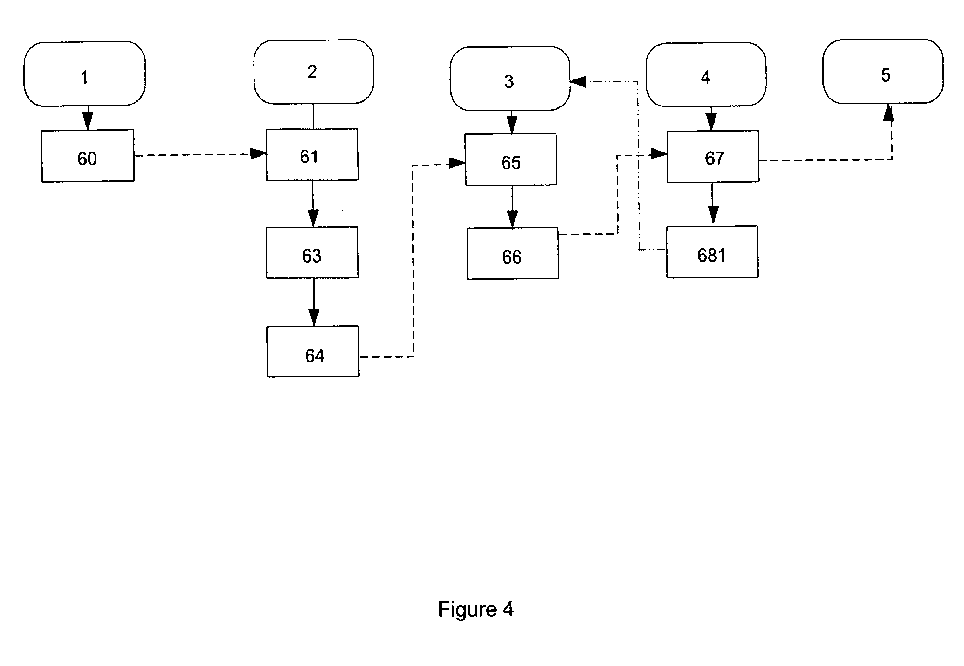

- la figure 4 représente un organigramme qui regroupe les étapes de la première déclinaison du procédé selon l'invention,

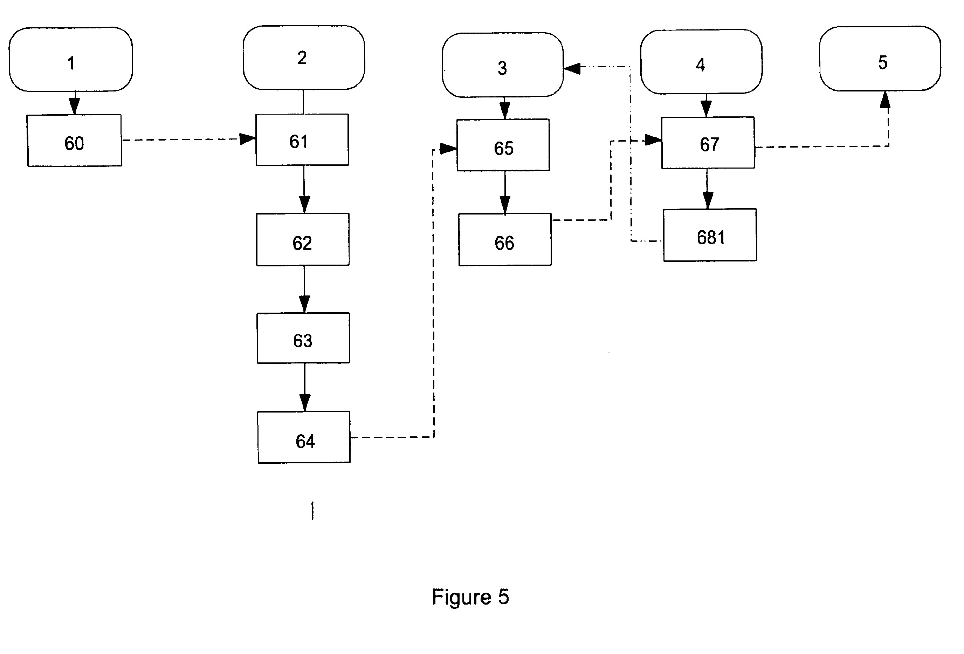

- la figure 5 représente un organigramme qui regroupe les étapes de la seconde déclinaison du procédé selon l'invention,

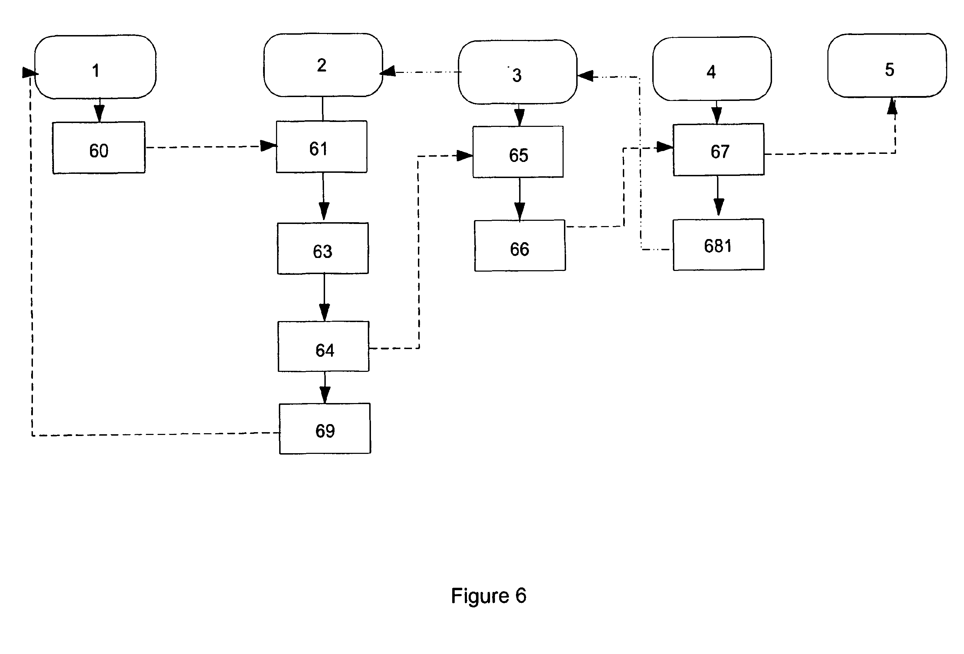

- la figure 6 représente un organigramme qui regroupe les étapes de la troisième déclinaison du procédé selon l'invention,

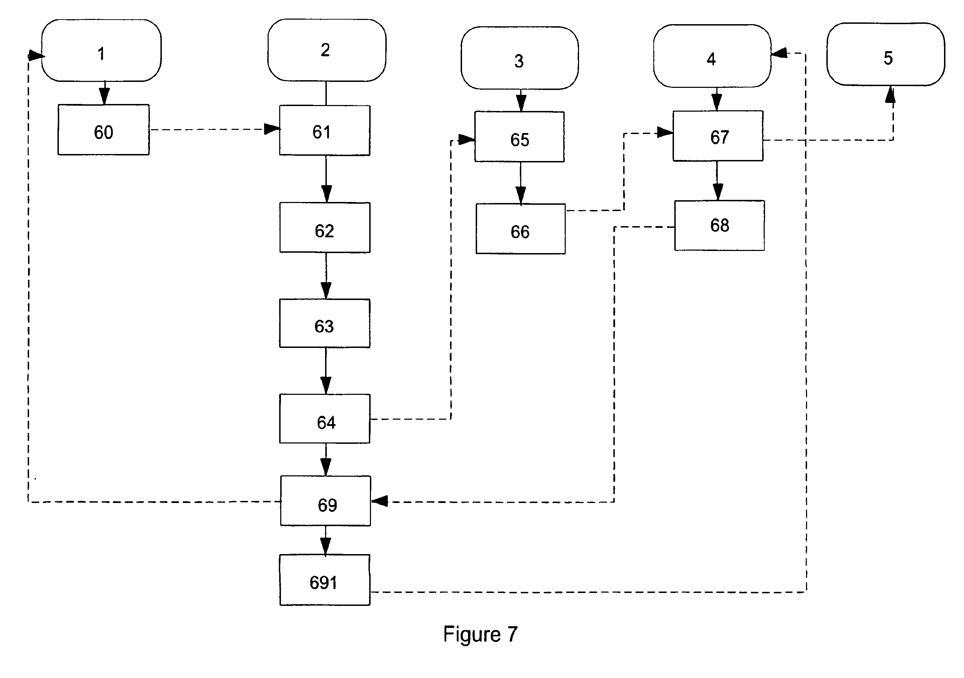

- la figure 7 représente un organigramme qui regroupe les étapes de la quatrième déclinaison du procédé selon l'invention,

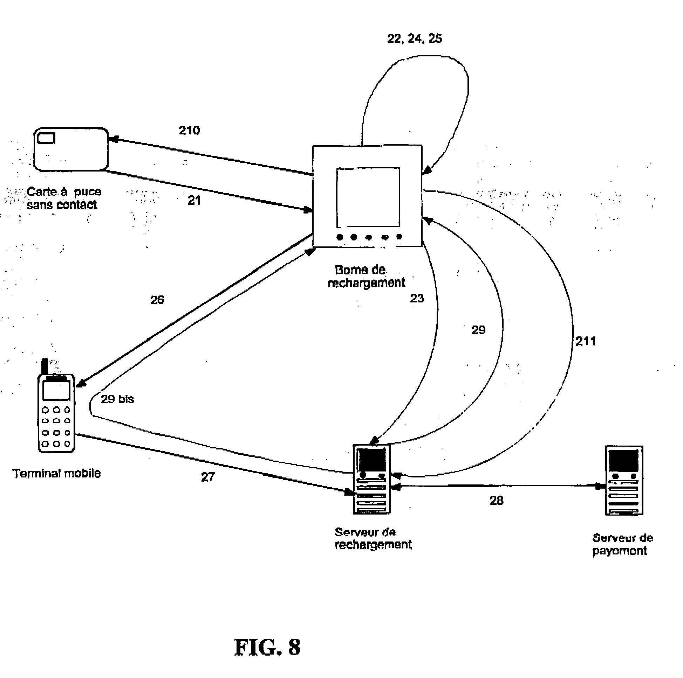

- la figure 8 représente un schéma du déroulement d'un cas générique de rechargement d'une carte à puce sans contact selon l'invention,

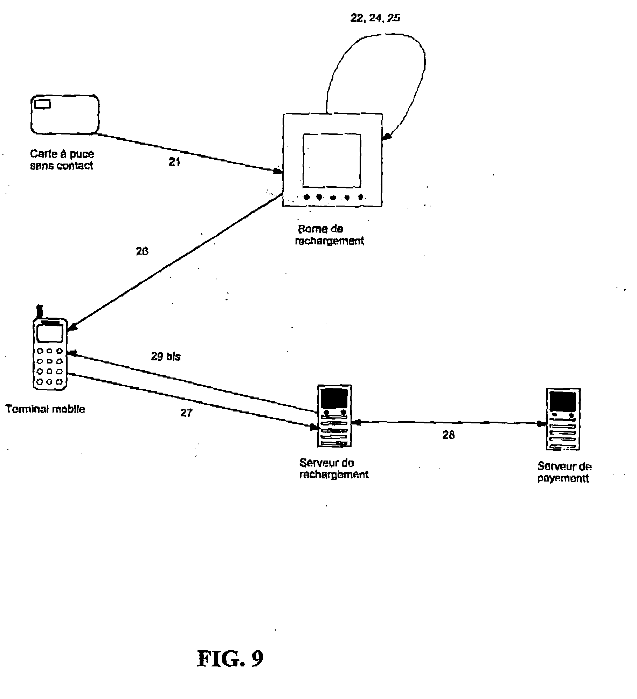

- la figure 9 représente un schéma du déroulement du procédé de rechargement selon l'invention lorsque le crédit est stocké dans le réseau et que la borne et le serveur de rechargement ne sont pas interconnectés,

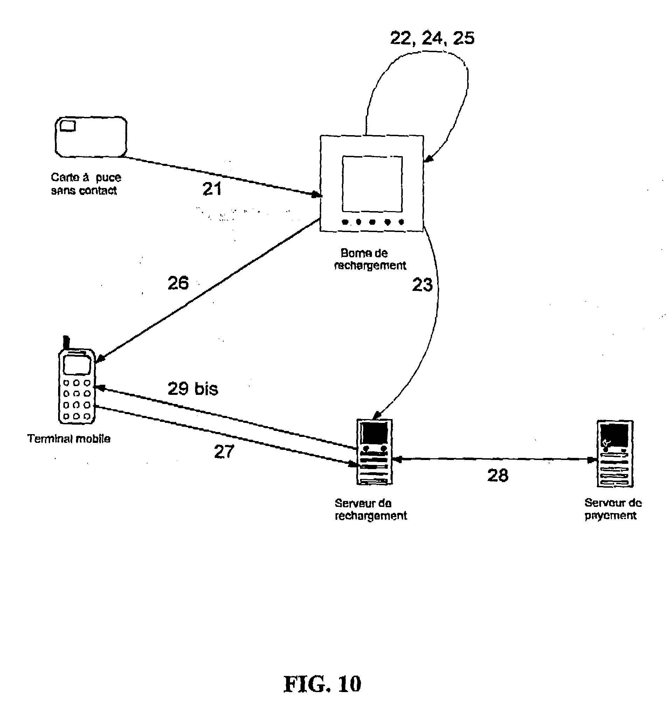

- la figure 10 représente un schéma du déroulement du procédé de rechargement selon l'invention lorsque le crédit est stocké dans le réseau et que la borne et le serveur de rechargement sont interconnectés,

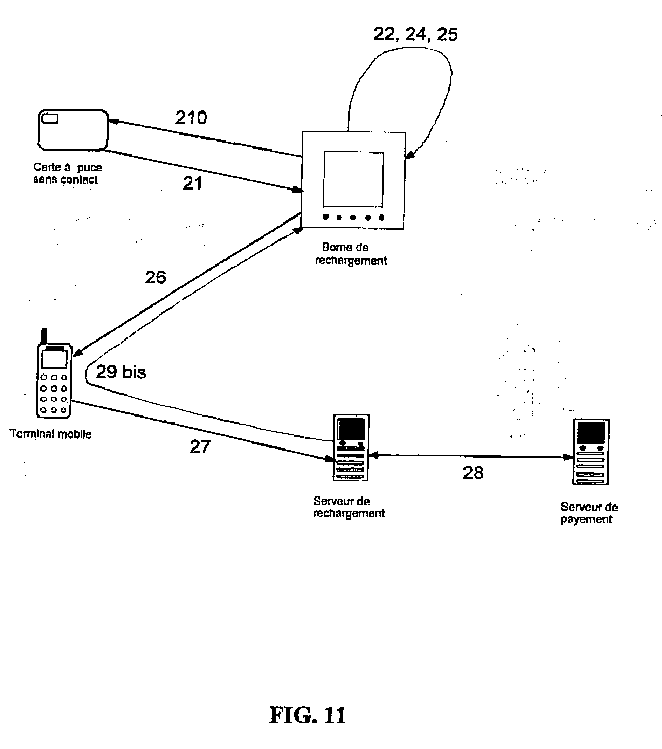

- la figure 11 représente un schéma du déroulement du procédé de rechargement selon l'invention lorsque le crédit est stocké dans la carte et que la borne et le serveur de rechargement ne sont pas interconnectés,

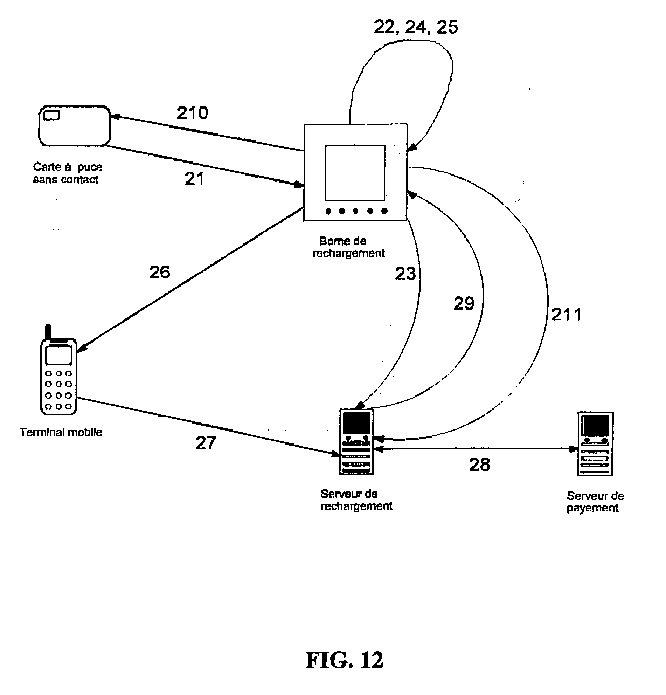

- la figure 12 représente un schéma du déroulement du procédé de rechargement selon l'invention lorsque le crédit est stocké dans la carte et que la borne et le serveur de rechargement sont interconnectés,
- l'annexe 1 représente un tableau récapitulatif des diverses étapes composant le procédé de rechargement selon l'invention.

Le dispositif selon l'invention comprend une carte à puce sans contact (1), une borne de rechargement (2), un terminal mobile (3) comme par exemple un terminal GSM, et un serveur de rechargement (4).

La carte à puce sans contact (1) est une carte comportant une puce (11) connectée à une antenne (12) laquelle permet la communication par radiofréquences entre la carte à puce (1) et un dispositif capable d'envoyer des informations à la puce ou de lui demander d'en transmettre. Les cartes à puce sans connexion sont par exemple des cartes qui utilisent la technologie RFId.

La borne de rechargement (2) s'interface avec la carte à puce sans contact (1) grâce à des moyens classiques de communication entre une carte à puce sans contact et une borne adaptée à une telle carte. La borne de rechargement (2) peut aussi être en interface avec un serveur de rechargement (4) grâce à des moyens traditionnels entre un applicatif et une borne. La borne de rechargement (2) peut être éventuellement interactive, c'est-à-dire qu'elle peut communiquer avec l'utilisateur afin de l'aider dans ses démarches. Chaque borne de rechargement (2) peut être caractérisée par un identifiant qui lui est propre et qui est rendu visible à l'utilisateur de la borne sous la forme par exemple d'un code à barres.

Le terminal mobile (3) est doté d'un moyen de lecture de formes (31) diverses, notamment celle des codes à barres. Le moyen de lecture de forme (31) est un moyen de lecture à courte distance (de l'ordre du mètre à quelques dizaines de mètres). Ce moyen (31) peut être la caméra CCD d'un appareil photographique numérique intégré au terminal mobile. Cette caméra CCD lit les ondes électromagnétiques émises par la borne de rechargement (2) dans une gamme de longueurs d'onde donnée et les transforme en un signal numérique qui est ensuite traité par un logiciel de reconnaissance de formes ou de caractères. Dans un mode de réalisation préféré, ce logiciel peut être déporté totalement ou partiellement dans le réseau. Le terminal mobile (3) est également muni de moyens de paiement au travers d'un réseau de télécommunication, ces moyens sont, par exemple, du type envoi de SMS. Le terminal mobile (3) est enfin muni d'un programme de gestion du rechargement (33) de cartes sans contact qui interagit avec le serveur de rechargement (4) à travers un moyen de communication quelconque. Le terminal mobile (3) dispose donc de deux interfaces qui sont, d'une part, les moyens classiques de communication par ondes hertziennes (32) et, d'autre part, les moyens de capture d'une forme (31). De plus, le terminal mobile (3) doit posséder un module d'identité, comme par exemple une carte SIM, pour que l'utilisateur soit clairement identifiable au cours du rechargement.

Le serveur de rechargement (4) s'interface avec le terminal mobile (3) et son système de paiement grâce à des moyens de communication connus du domaine de la téléphonie. Il peut également être en interface avec une ou plusieurs bornes de rechargement (2) qu'il peut ou non identifier. Le serveur de rechargement (4) est capable d'identifier le programme de gestion du rechargement (33) par le biais de la carte SIM et de faire le lien entre la carte SIM et les informations relatives à l'utilisateur qui sont nécessaires au règlement du rechargement de la carte.

Le programme de gestion du rechargement (33) du terminal mobile (3) permet à l'utilisateur d'identifier la borne de rechargement (2), de récupérer des informations liées à la transaction par le biais du moyen de lecture des codes à barres (31) du terminal mobile (3) et de saisir le montant du rechargement de sa carte à puce sans contact. Le programme de gestion du rechargement (33) permet également de communiquer avec le serveur de rechargement (4) en lui transmettant les informations relatives à la transaction à effectuer et en effectuant directement la transaction. Ces informations contiennent entre autres l'identification de l'utilisateur par le biais de la carte SIM.

La procédure générale de rechargement d'une carte à puce sans contact (1) comporte onze étapes. Au cours de la première étape (60), l'utilisateur passe sa carte à puce sans contact (1) sur la borne de rechargement (2), la borne (2) authentifie la carte et celle-ci transmet à la borne (2) des données pour une authentification mutuelle ainsi qu'un éventuel identifiant de transaction. Au cours de la deuxième étape (61), la borne de rechargement (2) affiche certaines informations relatives à la carte (1) et à la transaction en cours, ces informations peuvent être le solde de la carte et le choix du montant du rechargement. Au cours de la troisième étape (62), la borne (2) transmet au serveur de rechargement (4) les informations nécessaires à la transaction, c'est-à-dire l'éventuel identifiant de la borne, les donnée d'authentification de la carte, le montant de la transaction et, éventuellement, un identifiant de transaction afin de sécuriser la procédure. Dans une quatrième étape (63), la borne (2) invite l'utilisateur à lancer le programme de gestion du rechargement (33). Ces quatre premières étapes (60, 61, 62, 63) sont des étapes optionnelles.

Dans une cinquième étape (64), la borne (2) affiche un code à barres composé de l'identifiant de la borne, éventuellement de celui de la transaction, des données d'identification de la borne et/ou de la carte à puce ainsi que des données permettant à l'utilisateur de contacter le serveur de rechargement et enfin le montant de la transaction. Dans le cas où la troisième étape (62) a eu lieu, le code à barres ne contient que l'identifiant de la transaction puisque la borne est déjà connue du serveur de rechargement (4). Dans le cas où l'étape trois (62) n'a pas eu lieu, les données d'identification de la borne (2) et/ou de la carte à puce (1) doivent être transmises au serveur de rechargement (4).

Au cours de la sixième étape (65), l'usager fait une acquisition, grâce aux capacités de lecture de codes à barres (31) intégrées dans son terminal mobile (3), du code à barres affiché sur la borne (2).

Au cours de la septième étape (66), le programme de gestion du rechargement (33) contacte le serveur de rechargement (4), effectue le paiement de la transaction et informe le serveur de rechargement à propos du paiement et de la transaction. Dans cette étape, le serveur de rechargement peut déclencher le paiement en lieu et place du programme de gestion du rechargement.

Dans une huitième étape (67), le serveur de rechargement (4) vérifie le paiement/la transaction et authentifie la borne (2)/la carte à puce (1). Si le système de crédit associé à la carte (1) est un système central, le serveur de rechargement (4) crédite directement le serveur de paiement (5), un message d'acquittement de la transaction étant éventuellement transmis au programme de gestion du rechargement (33) et/ou à la borne (2). Si tel est le cas, la procédure entame directement sa onzième étape (691).

Dans une neuvième étape (68), le serveur de rechargement (4) transmet des données telles que des données d'authentification, etc. à la borne de rechargement (2) permettant ainsi le rechargement de la carte (1). L'étape (68) n'a pas lieu si l'étape suivante a lieu.

Au cours de l'étape neuf bis (681), le serveur de rechargement (4) acquitte le rechargement au programme de gestion du rechargement (33) qui peut présenter l'affichage de cet acquittement à l'utilisateur. Le serveur de rechargement transmet également des données telles que des données d'authentification, etc. permettant à la carte (1) d'être créditée. Ces informations sont transmises du programme de gestion du rechargement (33) à la borne de rechargement (2) avec une éventuelle intervention de l'usager. L'étape (681) n'a pas lieu si l'étape précédente (68) a lieu.

Dans une dixième étape (69), l'utilisateur passe sa carte à puce sans contact (1) sur la borne de rechargement (2). Les données du rechargement sont ainsi transmises de la borne (2) à la carte (1) et celle-ci est créditée.

La onzième étape (691) consiste en l'acquittement du rechargement par la borne de rechargement (2). Cette étape (691) est une étape optionnelle.

Différents mécanismes de sécurisation peuvent être mis en place au cours des étapes du procédé de rechargement selon l'invention. Par exemple, la carte à puce sans contact (1) peut émettre un challenge qui est transmis au serveur de rechargement (4), le couple que constitue le challenge et le montant du rechargement est alors signé par le serveur de rechargement (4). Le montant de rechargement et la signature du serveur de rechargement (4) sont transmis à la carte à puce (1) qui se crédite du montant transmis. Les mécanismes de sécurisation peuvent être, par exemple, un mécanisme de confiance de type TSL avec cryptage des échanges et authentifications mutualisées entre la carte à puce (1) et le serveur de rechargement (4). Ce dispositif peut être complété par la mise en place d'un mécanisme d'authentification mutualisé et de cryptages usuels dans les bornes de rechargement (2) de cartes à puce sans contact.

Le procédé dont les étapes sont décrites ci-dessus constitue le cas général de rechargement d'une carte à puce sans contact (1). Toutefois, il faut distinguer différents cas de figures dans la mise en place de ce procédé de rechargement. Ces différents cas dépendent du lieu de stockage du crédit et de l'interconnexion entre la borne de rechargement (2) et le serveur de rechargement (4) ou de son absence. Cela donne quatre déclinaisons du procédé général de rechargement.

La première déclinaison du procédé concerne le cas où le crédit est stocké dans le réseau et où le serveur de rechargement (4) et la borne (2) ne sont pas interconnectés. Dans cette déclinaison, une première étape (60) consiste en la présentation de la carte (1) à la borne (2) avec authentification mutuelle des deux entités.

Au cours de la deuxième étape (61), la borne (2) affiche le montant du solde de la carte (1) et invite l'utilisateur à choisir le montant du rechargement.

Dans une troisième étape (63), la borne (2) invite l'usager à lancer le programme de gestion du rechargement.

Toutes ces étapes (60, 61, 63) sont des étapes optionnelles.

Dans une quatrième étape (64), la borne (2) affiche un code à barres composé de l'identifiant de la borne (2) et des données concernant la transaction.

Dans une cinquième étape (65), l'utilisateur fait une acquisition du code à barres affiché par la borne (2) par le biais des moyens d'acquisition de données dont dispose son terminal mobile (3).

Dans une sixième étape (66), le programme de gestion du rechargement (33) transfère les informations relatives à la transaction au serveur de rechargement (4).

Dans une septième étape (67), le serveur de rechargement (4) vérifie le paiement/la transaction et authentifie la borne (2)/la carte à puce (1).

Dans une huitième étape (681), le serveur de rechargement (4) acquitte le rechargement auprès du programme de gestion du rechargement (33) qui peut en présenter l'affichage à l'utilisateur. Ici aucune information n'est transmise à la borne de rechargement (2), que se soit par le serveur de rechargement (4) ou par le programme de gestion du rechargement (33).

La seconde déclinaison du procédé de rechargement concerne le cas où le crédit est stocké dans le réseau et où le serveur de rechargement (4) et la borne de rechargement (2) sont interconnectés. Dans cette déclinaison, une première étape (60) consiste en la présentation de la carte (1) à la borne (2) avec authentification mutuelle des deux entités.

Au cours de la deuxième étape (61), la borne (2) affiche le montant du solde de la carte (1) et invite l'utilisateur à choisir le montant du rechargement.

Dans une troisième étape (62), la borne de rechargement (2) transmet au serveur de rechargement (4) son identifiant, des données d'authentification de la borne/de la carte, le montant de la transaction et éventuellement des données sécuritaires.

Dans une quatrième étape (63), la borne (2) invite l'usager à lancer le programme de gestion du rechargement. Toutes ces étapes (60, 61, 62, 63) sont des étapes optionnelles.

Dans une cinquième étape (64), la borne (2) affiche un code à barres composé de l'identifiant de la borne (2) et des données concernant la transaction.

Dans une sixième étape (65), l'utilisateur fait une acquisition du code à barres affiché par la borne (2) par le biais des moyens d'acquisition de données dont dispose son terminal mobile (3).

Dans une septième étape (66), le programme de gestion du rechargement (33) transfère les informations relatives à la transaction au serveur de rechargement (4).

Dans une huitième étape (67), le serveur de rechargement (4) vérifie le paiement/la transaction et authentifie la borne (2)/la carte à puce (1).

Dans une neuvième étape (681), le serveur de rechargement (4) acquitte le rechargement au programme de gestion du rechargement (33) qui peut en présenter l'affichage à l'utilisateur.

Dans les deux déclinaisons du procédé décrites ci-dessus, la carte à puce sans contact (1) ne contient aucune information relative au rechargement à l'issue de la procédure, elle ne joue qu'un rôle d'identification au début de la procédure de rechargement.

La troisième déclinaison du procédé de rechargement concerne le cas où le crédit est stocké dans la carte et où le serveur de rechargement (4) et la borne de rechargement (2) ne sont pas interconnectés. Dans cette déclinaison, une première étape (60) consiste en la présentation de la carte (1) à la borne (2) avec authentification mutuelle des deux entités.

Au cours de la deuxième étape (61), la borne (2) affiche le montant du solde de la carte (1) et invite l'utilisateur à choisir le montant du rechargement.

Dans une troisième étape (63), la borne (2) invite l'usager à lancer le programme de gestion du rechargement.

Toutes ces étapes (60, 61, 62, 63) sont des étapes optionnelles.

Dans une quatrième étape (64), la borne (2) affiche un code à barres composé de l'identifiant de la borne (2) et des données concernant la transaction.

Dans une cinquième étape (65), l'utilisateur fait une acquisition du code à barres affiché par la borne (2) par le biais des moyens d'acquisition de données dont dispose son terminal mobile (3).

Dans une sixième étape (66), le programme de gestion du rechargement (33) transfère les informations relatives à la transaction au serveur de rechargement (4).

Dans une septième étape (67), le serveur de rechargement (4) vérifie le paiement/la transaction et authentifie la borne (2)/la carte à puce (1).

Dans une huitième étape (681), le serveur de rechargement (4) acquitte le rechargement au programme de gestion du rechargement (33) qui peut en présenter l'affichage à l'utilisateur. Le programme de gestion du rechargement (33) transmet l'information à la borne de rechargement (2) afin que la carte à puce puisse être rechargée.

Dans une neuvième étape (69), l'usager passe sa carte à puce (1) sur la borne de rechargement (2) afin que les données relatives au rechargement soient transmises à la carte (1). La carte est ainsi créditée.

La quatrième déclinaison du procédé de rechargement concerne le cas où le crédit est stocké dans la carte et où le serveur de rechargement (4) et la borne de rechargement (2) sont interconnectés. Dans cette déclinaison, une première étape (60) consiste en la présentation de la carte (1) à la borne (2) avec authentification mutuelle des deux entités.

Au cours de la deuxième étape (61), la borne (2) affiche le montant du solde de la carte (1) et invite l'utilisateur à choisir le montant du rechargement.

Dans une troisième étape (62), la borne de rechargement (2) transmet au serveur de rechargement (4) son identifiant, des données d'authentification de la borne/ de la carte, le montant de la transaction et éventuellement des données sécuritaires.

Dans une quatrième étape (63), la borne (2) invite l'usager à lancer le programme de gestion du rechargement.

Toutes ces étapes (60, 61, 62, 63) sont des étapes optionnelles.

Dans une cinquième étape (64), la borne (2) affiche un code à barres composé de l'identifiant de la borne (2) et des données concernant la transaction.

Dans une sixième étape (65), l'utilisateur fait une acquisition du code à barres affiché par la borne (2) par le biais des moyens d'acquisition de données dont dispose son terminal mobile (3).

Dans une septième étape (66), le programme de gestion du rechargement (33) transfère les informations relatives à la transaction au serveur de rechargement (4).

Dans une huitième étape (67), le serveur de rechargement (4) vérifie le paiement/la transaction et authentifie la borne (2)/la carte à puce (1).

Dans une neuvième étape (68), le serveur de rechargement (4) transmet les données relatives à la procédure à la borne de rechargement (2) permettant à la carte à puce (1) d'être créditée.

Dans une dixième étape (69), l'usager passe sa carte à puce (1) sur la borne de rechargement (2) afin que les données relatives au rechargement soient transmises à la carte (1). La carte est ainsi créditée.

Dans une onzième étape (691), le rechargement est acquitté par la borne.

Dans les deux déclinaisons du procédé décrites ci-dessus, la carte à puce sans contact (1) mémorise le résultat de la procédure de rechargement, c'est donc elle qui contient toutes les informations issues de cette procédure.

Lorsque l'utilisateur souhaite recharger sa carte sans contact (1), il se rend à une borne de rechargement (2) et lance son programme de gestion du rechargement (33). L'utilisateur passe sa carte à puce (1) sur la borne de rechargement (2) qui affiche ensuite un code à barres. Le programme de gestion du rechargement (33) lit le code à barres généré par la borne (2) et le transmet grâce à un SMS surtaxé au serveur de rechargement (4). Le montant de la surtaxe du SMS sert de montant à créditer sur la carte à puce (1). Un message indiquant le montant à créditer sur la carte (1) est transmis par le serveur de rechargement (4) à la borne de rechargement (2) identifiée grâce à son code à barres. Ce message transite grâce au réseau local qui interconnecte la borne de rechargement (2) au serveur de rechargement (4). Dès réception de ce message, la borne de rechargement (2) le transmet à la première carte à puce sans contact (1) qui est passée. La carte à puce (1) se crédite du montant indiqué dans le message.

Il doit être évident, pour les personnes versées dans l'art, que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

**Annexe 1**

| | | |
|---|---|---|
| 201 | L'usager passe sa carte à puce sans contact sur la borne de rechargement. La carte et la borne s'authentifient éventuellement mutuellement et/ou la carte transmet à la borne les données nécessaires à une éventuelle authentification mutuelle de la carte et du serveur de rechargement. La carte fournit un éventuel identifiant de transaction. | Etape optionnelle |
| 202 | La borne affiche le crédit disponible et invite l'usager à saisir/sélectionner le montant de rechargement. L'usager saisit/sélectionne le montant du rechargement. | Etape optionnelle |
| 203 | La borne transmet éventuellement au serveur de rechargement : | Etape optionnelle |
| | ➢ l'identifiant de la borne, | |
| | ➢ les données d'authentification de la borne et/ou de la carte avec le serveur de rechargement, | |
| | ➢ le montant éventuel de la transaction, | |
| | ➢ un identifiant éventuel de transaction (ou le serveur de rechargement acquitte en fournissant un identifiant de transaction). | |
| 204 | La borne invite l'usager à lancer le programme de gestion du rechargement | Etape optionnelle |
| 205 | La borne affiche un code à barres composé de : | A noter que si l'étape 23 a été effectuée, le code à barres peut ne contenir que l'identifiant de la transaction. Si l'étape 23 n'a pas eu lieu, des données d'identification de la borne et/ou de la carte doivent être transmises. A noter que si les données d'authentification, d'adressage et de montant ne sont pas intégrées, le code à barres peut être statique. |
| | ➢ l'identifiant de la borne, | |
| | ➢ l'identifiant éventuel de transaction, | |
| | ➢ des données éventuelles d'authentification de la borne et/ou de la carte avec le serveur de rechargement, | |
| | ➢ des données éventuelles permettant au client de contacter le serveur de rechargement adéquat (ex : "bearer", paramètres de connexion, adresse...), | |
| | ➢ le montant éventuel de la transaction. | |
| 206 | L'usager grâce au programme de gestion du rechargement intégrant des capacités de lecture de code à barres fait une acquisition du code à barres affiché sur la borne. | |
| 207 | Le programme de gestion du rechargement : | Le paiement peut être déclenché par le serveur de rechargement au lieu du programme de gestion du rechargement. |
| | ➢ contacte le serveur de rechargement, | |
| | ➢ effectue un paiement et transmet les informations de paiement au serveur de rechargement, | |
| | ➢ transmet les éventuelles informations de transaction au serveur de rechargement. | |
| 208 | Le serveur de rechargement vérifie le paiement/la transaction et authentifie éventuellement la borne et/ou la carte. | Si le système de crédit associé à la carte est un système central, le serveur de rechargement crédite le système central Un message d'acquittement de transaction est éventuellement transmis au programme de gestion du rechargement et/ou à la borne et on passe à l'étape 211. |
| 209 | Le serveur de rechargement transmet les données (ex : ses données d'authentification, le montant signé à créditer, ...) à la borne de rechargement permettant à la carte d'être créditée. | L'étape 209 n'a pas lieu si l'étape 209 bis a lieu ou dans le cas de la remarque indiquée dans l'étape 208. |
| 209 bis | Le serveur de rechargement acquitte éventuellement le rechargement au programme de gestion du rechargement qui peut présenter l'affichage de cet acquittement à l'usager. Le serveur de rechargement transmet éventuellement les données (ex : ses données d'authentification, le montant signé à créditer, ...) permettant à la carte d'être créditée, au programme de gestion du rechargement. Ces informations sont transmises du programme de gestion du rechargement à la borne de rechargement (avec une éventuelle intervention de l'usager). | L'étape 209 bis n'a pas lieu si l'étape 209 a lieu ou dans le cas de la remarque indiquée dans l'étape 208. |
| 210 | L'usager passe sa carte à puce sans contact sur la borne de rechargement. Les données de rechargement sont transmises de la borne à la carte. La carte est créditée. | Etape optionnelle dans le cas de la remarque de l'étape 208. |
| 211 | Le rechargement est acquitté par la borne. | Etape optionnelle |

## Revendications

1. Procédé de rechargement d'une carte à puce sans contact (1), comportant une étape de communication entre une borne de rechargement (2) et une carte à puce sans contact (1), une étape de communication entre la borne de rechargement (2) et un terminal mobile (3), et une étape de paiement par utilisation de moyens de paiement au travers d'un réseau de communication et d'un module d'identité, **caractérisé en ce que** le procédé comporte :
- une étape d'affichage (64) par la borne de rechargement (2) d'un code à barres composé éventuellement d'un'identifiant de la borne (2), éventuellement de celui d'une transaction, de données d'identification concernant la carte à puce sans contact (1) ou la borne,
- une étape (65) d'acquisition des informations affichées par la borne de rechargement (2) lors de l'étape (64) d'affichage, par utilisation de moyens de lecture de formes (31) du terminal mobile (3),
- une étape de communication (66) entre le terminal mobile (3) et un serveur de rechargement (4), dans laquelle un programme de gestion du rechargement (33) prévu dans le terminal mobile (3) est utilisé pour transmettre au serveur de rechargement (4) le code à barres, ou une partie des informations contenues dans le code à barres, saisi lors de l'étape (65) précédente,
- une étape de vérification (67) du paiement de la transaction et d'authentification de la borne (2) de la carte à puce (1), cette étape étant effectuée par le serveur de rechargement (4),
- une étape de transmission (68) directe ou indirecte du serveur de rechargement (4) vers la borne de rechargement (2) des données permettant à la carte à puce (1) d'être créditée,
- une étape de transmission (69) entre la borne de rechargement (2) et la carte à puce sans contact (1) des informations relatives à la réalisation de la transaction, et créditant la carte à puce (1).

2. Procédé selon la revendication 1, comportant des étapes d'identification (60) de la carte à puce (1), d'affichage (61) des informations de la carte par la borne (2), de communication (62) entre la borne (2) et le serveur de rechargement (4), d'invitation (63) de la borne (2) à lancer le programme de gestion du rechargement (33), et d'acquittement du rechargement par la borne (2).

3. Procédé selon la revendication 1, dans lequel un déclenchement du paiement de la transaction est réalisé au cours de l'étape de communication (66) avec le serveur de rechargement (4), ce paiement étant déclenché par le serveur de rechargement (4) ou par le programme de gestion du rechargement (33).

4. Procédé selon la revendication 1, **caractérisé en ce que** si le système de crédit associé à la carte à puce (1) est un système central, le serveur de rechargement (4) crédite directement un serveur de paiement (5), et le procédé passe alors de l'étape de vérification du paiement (67) à une étape d'acquittement du rechargement (691).

5. Procédé selon la revendication 1, **caractérisé en ce que** l'étape (68) de transmission des données permettant de créditer la carte à puce (1) du serveur de rechargement (4) vers la borne de rechargement (2) s'effectue indirectement et comprend une étape intermédiaire (681) de transmission des données du serveur de rechargement (4) vers le programme de gestion du rechargement (33).

6. Procédé selon la revendication 1, dans lequel un challenge est transmis par la carte à puce (1) au serveur de rechargement (4) qui signe le couple challenge-montant de la transaction, la carte à puce (1) se créditant du montant de la transaction si elle reconnaît la signature du serveur de rechargement (4).

7. Procédé selon la revendication 6, comportant un mécanisme de confiance de type TSL avec cryptage des échanges et authentification mutuelle entre la carte à puce (1) et le serveur de rechargement (4), et éventuellement entre la borne (2) et la carte à puce (1).

8. Procédé selon la revendication 1 ou 2, **caractérisé en ce que** lorsque le crédit est stocké dans le réseau et que le serveur de rechargement (4) et la borne de rechargement (2) sont, soit interconnectés, soit ne sont reliés qu'indirectement par l'intermédiaire du terminal mobile (3) doté du programme de gestion du rechargement (33), l'étape de transmission (68) des données permettant à la carte à puce (1) d'être créditée comprend :
- une étape de transmission (681) du serveur de rechargement (4) vers le programme de gestion du rechargement (33) des données permettant à la carte à puce (1) d'être créditée, le programme de gestion du rechargement (33) pouvant afficher ces données à l'utilisateur et celui-ci pouvant les transmettre à la borne de rechargement (2).

9. Procédé selon la revendication 1 ou 2, **caractérisé en ce que** lorsque le crédit est stocké dans la carte à puce (1) et que le serveur de rechargement (4) et la borne de rechargement (2) ne sont reliés qu'indirectement par l'intermédiaire du terminal mobile (3) doté du programme de gestion du rechargement (33), l'étape de transmission (68) des données permettant à la carte à puce (1) d'être créditée comprend :
une étape de transmission (681) du serveur de rechargement (4) vers le programme de gestion du rechargement (33) des données permettant à la carte à puce (1) d'être créditée, le programme de gestion du rechargement (33) pouvant afficher ces données à l'utilisateur et celui-ci pouvant les transmettre à la borne de rechargement (2).

10. Procédé selon la revendication 1 ou 2, **caractérisé en ce que** lorsque le crédit est stocké dans la carte à puce (1) et que le serveur de rechargement (4) et la borne de rechargement sont interconnectés, le procédé comprend :
- une étape d'acquittement (691) du rechargement par la borne de rechargement (2).

11. Dispositif de rechargement d'une carte à puce sans contact (1) comportant une borne de rechargement (2) apte à communiquer avec une carte à puce sans contact (1) pouvant posséder un identifiant qui lui est propre, un terminal mobile (3) doté d'un programme de gestion du rechargement (33) apte à communiquer avec un serveur de rechargement (4) par un moyen de communication quelconque, des moyens de paiement au travers d'un réseau de communication et d'un module d'identité, et un serveur de rechargement (4), **caractérisé en ce que** le terminal mobile (3) comporte des moyens de lecture de formes (31) permettant l'acquisition de l'identifiant de la borne (2).

12. Dispositif selon la revendication 11, **caractérisé en ce que** les moyens de lecture de formes (31) comportent un appareil photographique numérique.

13. Dispositif selon la revendication 11, **caractérisée en ce que** les moyens d'analyse des formes (31) sont partiellement ou totalement déportés dans le réseau.

14. Dispositif selon la revendication 11, **caractérisé en ce que** les moyens de paiement au travers d'un réseau de télécommunication sont du type SMS.

15. Dispositif selon la revendication 11, **caractérisé en ce que** la borne de rechargement (2) est en interface avec le serveur de rechargement (4) grâce à des moyens traditionnels de communication entre un applicatif et une borne.

16. Dispositif selon la revendication 11, **caractérisé en ce que** la borne de rechargement est interactive.

17. Dispositif selon la revendication 11, **caractérisé en ce que** le programme de gestion du rechargement (33) comprend des moyens pour transférer, dans un message SMS destiné au serveur de rechargement (4), une information d'un code à barres lu à partir des moyens de lecture de formes (31).

## Claims

1. Method for recharging a contactless smart card (1) including a step of communication between a recharging terminal (2) and a contactless smart card (1), a step of communication between the recharging terminal (2) and a mobile terminal (3), and a step of payment by using means of payment through a communication network and an identity module, **characterised in that** the method includes:
- a step (64) in which the recharging terminal (2) displays a bar code composed possibly of a terminal identifier (2), possibly of a transaction identifier, identification data concerning the contactless smart card (1) or the terminal,
- a step (65) of capturing the information displayed by the recharging terminal (2) at the time of the display step (64), by using form reading means (31) of the mobile terminal (3),
- a step (66) of communication between the mobile terminal (3) and a recharging server (4) in which a recharging control program (33) provided in the mobile terminal (3) is used for transmitting to the recharging server (4) the bar code, or part of the information contained in the bar code, captured at the time of the preceding step (65),
- a step (67) of verifying the payment for the transaction and of authenticating the terminal (2) of the smart card (1), this step being carried out by the recharging server (4),
- a step (68) of direct or indirect transmission from the recharging server (4) to the recharging terminal (2) of the data allowing the smart card (1) to be credited,
- a step (69) of transmission between the recharging terminal (2) and the contactless smart card (1) of the information relating to the realisation of the transaction, and crediting the smart card (1).

2. Method according to Claim 1, including steps of identification (60) of the smart card (1), display (61) of the information on the card by the terminal (2), communication (62) between the terminal (2) and the recharging server (4), invitation (63) to the terminal (2) to start the recharging control program (33), and acknowledgment of recharging by the terminal (2).

3. Method according to Claim 1, in which payment for the transaction is triggered during the step (66) of communication with the recharging server (4), this payment being triggered by the recharging server (4) or by the recharging control program (33).

4. Method according to Claim 1, **characterised in that**, if the credit system associated with the smart card (1) is a central system, the recharging server (4) directly credits a payment server (5), and the method then passes from the step of verifying the payment (67) to the step of acknowledgment of recharging (691).

5. Method according to Claim 1, **characterised in that** the step (68) of transmitting the data allowing the smart card (1) to be credited from the recharging server (4) to the recharging terminal (2) is carried out indirectly and comprises an intermediate step (681) of transmitting the data from the recharging server (4) to the recharging control program (33).

6. Method according to Claim 1, in which a challenge is transmitted by the smart card (1) to the recharging server (4), which signs the challenge/ transaction amount pair, the smart card (1) being credited with the amount of the transaction if it recognises the signature of the recharging server (4).

7. Method according to Claim 6, including a confidence mechanism of the TSL type with encryption of exchanges and mutual authentication between the smart card (1) and the recharging server (4), and if appropriate between the terminal (2) and the smart card (1).

8. Method according to Claim 1 or 2, **characterised in that**, when the credit is stored in the network and when the recharging server (4) and the recharging terminal (2) are either interconnected or connected only indirectly via the mobile terminal (3) provided with the recharging control program (33), the step (68) of transmitting the data allowing the smart card (1) to be credited comprises:
- a step (681) of transmission from the recharging server (4) to the recharging control program (33) of data allowing the smart card (1) to be credited, it being possible for the recharging control program (33) to display these data to the user and the latter being able to transmit them to the recharging terminal (2).

9. Method according to Claim 1 or 2, **characterised in that** when the credit is stored in the smart card (1) and when the recharging server (4) and the recharging terminal (2) are connected only indirectly via the mobile terminal (3) provided with the recharging control program (33), the step (68) of transmitting the data allowing the smart card (1) to be credited comprises:
- a step (681) of transmission from the recharging server (4) to the recharging control program (33) of data allowing the smart card (1) to be credited, the recharging control program (33) being able to display these data to the user and the latter being able to transmit them to the recharging terminal (2).

10. Method according to Claim 1 or 2, **characterised in that**, when the credit is stored in the smart card (1) and when the recharging server (4) and the recharging terminal (2) are interconnected, the method comprises:
- a step (691) in which the recharging terminal (2) acknowledges recharging.

11. Device for recharging a contactless smart card (1), including a recharging terminal (2) capable of communicating with a contactless smart card (1), which can have an identifier that is specific to it, a mobile terminal (3) provided with a recharging control program (33) capable of communicating with a recharging server (4) by any means of communication, means for payment through a communication network and an identity module, and a recharging server (4), **characterised in that** the mobile terminal (3) includes form reading means (31) allowing the terminal identifier (2) to be captured.

12. Device according to Claim 11, **characterised in that** the form reading means (31) include a digital camera.

13. Device according to Claim 11, **characterised in that** the form analysis means (31) are partly or completely offset in the network.

14. Device according to Claim 11, **characterised in that** the means for payment through a telecommunications network are of the SMS type.

15. Device according to Claim 11, **characterised in that** the recharging terminal (2) is interfaced with the recharging server (4) thanks to traditional means of communication between an application and a terminal.

16. Device according to Claim 11, **characterised in that** the recharging terminal is interactive.

17. Device according to Claim 11, **characterised in that** the recharging control program (33) comprises means for transferring, in an SMS message addressed to the recharging server (4), bar code information read from the form reading means (31).

## Patentansprüche

1. Verfahren zum Wiederaufladen einer kontaktlosen Chipkarte (1), das einen Kommunikationsschritt zwischen einem Wiederauftadungsterminal (2) und einer kontaktlosen Chipkarte (1), einen Kommutzikationsschritt zwischen dem Wiederaufladungsterminal (2) und einem mobilen Terminal (3) und einen Bezahlungs-Schritt durch Benutzung von Zahlungsmitteln über ein Kommunikationsnetz und ein Identitätsmodul umfasst, **dadurch gekennzeichnet, dass** das Verfahren folgendes umfasst:
- einen Schritt (64) zur Anzeige eines eventuell aus einer Identifizierung des Terminals (2), eventuell aus der Identifizierung einer Transaktion, der die kontaktlose Chipkarte (1) oder das Terminal betreffenden Identifizierungsdaten bestehenden Balkencodes durch das Wiederaufladungsterminal (2),
- einen Schritt (65) zur Akquisition von Informationen, die von dem Wiederaufladungsterminal (2) beim Anzeigeschritt (64) angezeigt werden, durch die Benutzung von Formlesemitteln (31) des mobilen Terminals (3),
- einen Kommunikationsschritt (66) zwischen dem mobilen Terminal (3) und einem Wiederaufladungsserver (4) bei dem ein Wiederaufladungsverwaltungsprogramm (33) benutzt wird, das im mobilen Terminal (3) vorgesehen ist, um den Balkencode, oder einen Teil des in diesem beim vorhergehenden Schritt (65) eingegebenen Balkencodes zum Wiederaufladungsserver (4) zu übertragen,
- einen Schritt (67) zur Überprüfung der Bezahlung der Transaktion und Authentifizierung des Terminals (2) der Chipkarte (1), wobei dieser Schritt vom Wiederaufladangsserver (4) ausgeführt wird,
- einen direkten oder indirekten Schritt (68) zur Übertragung der Daten, die eine Gutschrift der Chipkarte ermöglichen, vom Wiederaufladungsserver (4) zum Wiederaufladungsterminal (2),
- einen Schritt (69) zur Übertragung der Informationen in Bezug auf die Durchführung der Transaktion und Gutschrift der Chipkarte (1) zwischen dem Wiederaufladungsterminal (2) und der kontaktlose Chipkarte (1).

2. Verfahren nach Patentanspruch 1, umfassend Schritte (60) zur Identifizierung der Chipkarte (1), Schritte (61) zur Anzeige der Informationen der Karte durch das Terminal (2), zur Kommunikation (62) zwischen dem Terminal (2) und dem Wiederaufladungsserver (4), zur Aufforderung (63) an das Terminal (2), das Wiederaufladungsprogramm (33) zu starten, und Bestätigung der Wiederaufladung durch das Terminal (2).

3. Verfahren nach Patentanspruch 1, bei dem eine Bezahlung der Transaktion während des Kommunikationsschritts (66) mit dem Wiederaufladungsserver (4) gestartet wird, wobei diese Bezahlung durch den Wiederaufladungsserver (4) oder durch das Wiederaufladungsverwaltungsprogramm (33) gestartet wird.

4. Verfahren nach Patentanspruch 1, **dadurch gekennzeichnet, dass**, wenn das der Chipkarte (1) zugeordnete Gutschriftsystem ein Zentralsystem ist, der Wiederaufladungsserver (4) direkt einen Zahlungsserver (5) gutschreibt und das Verfahren also vom Überprüfungsschritt der Bezahlung (67) auf einen Wiederaufladungsbestätigungsschritt (691) übergeht.

5. Verfahren nach Patentanspruch 1, **dadurch gekennzeichnet, dass** der Schritt (68) der Übertragung der Daten, die die Gutschrift der Chipkarte (1) ermöglichen, vom Wiederaufladungsserver (4) zum Wiederaufladungsterminal (2) indirekt ausgeführt wird und einen intermediären Schritt (681) zur Übertragung der Daten des Wiederaufladungsservers (4) zum Wiederaufladungsverwaltungsprogramm umfasst.

6. Verfahren nach Patentanspruch 1, bei dem eine Anfrage durch die Chipkarte (1) an den Wiederaufladungsserver (4) übertragen wird, der das Paar Anforderung -Summe der Transaktion unterschreibt, wobei die Chipkarte (1) mit dem Transaktionsbetrag gutgeschrieben wird, wenn sie die Unterschrift des Wiederaufladungsservers (4) erkennt.

7. Verfahren nach Patentanspruch 6, umfassend einen Vertrauens - Mechanismus vom Typ TSL mit Verschlüsselung der gegenseitigen Austausch - und Authentifzierungsvorgänge zwischen der Chipkarte (1) und dem Wiederaufladungsserver (4) und eventuell zwischen dem Terminal (2) und der Chipkarte (1).

8. Verfahren nach Patentanspruch 1 oder 2, **dadurch gekennzeichnet, dass**, wenn die Gutschrift im Netz gespeichert ist und der Wiederaufladungsserver (4) und das Wiederaufladungsterminal (2) entweder direkt miteinander oder nur indirekt über das mit dem Wiederaufladungsverwaltungsprogramm (33) ausgerüstete mobile Terminal (3) miteinander verbunden sind, der Datenübertragungsschritt (68), der das Gutschreiben der Chipkarte (1) ermöglicht, folgendes umfasst:
- einen die Gutschreibung der Chipkarte (1) ermöglichenden Schritt zur Übertragung (681) von Daten vom Wiederaufladungsserver (4) zum Wiederaufladungsverwaltungsprogramm (33), wobei das Wiederaufladungsverwaltungsprogramm (33) diese Daten dem Benutzer oder dem, der sie zum Wiederaufladungsprogramm (2) übertragen kann, anzeigt.

9. Verfahren nach Patentanspruch 1 oder 2, **dadurch gekennzeichnet, dass**, wenn die Gutschrift in der Chipkarte (1) gespeichert ist und der Wiederaufladungsserver (4) und das Wiederaufladungsterminal (2) entweder direkt miteinander oder nur indirekt über das mit dem Wiederaufladungsverwaltungsprogramm (33) ausgerüstete mobile Terminal (3) miteinander verbunden sind, der Datenübertragungsschritt (68), der das Gutschreiben der Chipkarte (1) ermöglicht, folgendes umfasst:
- einen die Gutschreibung der Chipkarte (1) ermöglichenden Schritt zur Übertragung (681) von Daten vom Wiederaufladungsserver (4) zum Wiederaufladungsverwaltungsprogramm (33), wobei das Wiederaufladungsverwaltungsprogramm (33) diese Daten dem Benutzer oder dem der sie zum Wiederaufladungsprogramm (2) übertragen kann, anzeigt.

10. Verfahren nach Patentanspruch 1 oder 2, **dadurch gekennzeichnet, dass**, wenn die Gutschrift in der Chipkarte (1) gespeichert ist und der Wiederaufladungsserver (4) und das Wiederaufladungsterminal (2) direkt miteinander verbunden sind, das Verfahren folgendes umfasst:
- einen Wiederaufladungsbestätigungsschritt (691) durch das Wiederaufladungsterminal (2).

11. Vorrichtung zur Wiederaufladung einer kontaktlosen Chipkarte (1) umfassend :
- ein Wiederaufladungsterminal (2), das in der Lage ist, mit einer kontaktlosen Chipkarte (1) zu kommunizieren, die eine eigene Identifizierung besitzen kann,
- ein mobiles Terminal (3) das mit einem Wiederaufladungsverwaltungsprogramm (33) ausgerüstet ist, das in der Lage ist, über beliebige Kommunikationsmittel mit einem Wiederaufladungsserver (4) zu kommunizieren,
- Mittel zur Zahlung über ein Kommunikationsnetz und ein Identitätsmodul und
- einen Wiederaufladungsserver (4),
**dadurch gekennzeichnet, dass** das mobile Terminal (3) Mittel zum Lesen von Formen (31) umfasst, wodurch die Akquisition der Identifizierung des Terminals (2) ermöglicht wird.

12. Vorrichtung nach Patentanspruch 11, **dadurch gekennzeichnet, dass** die Mittel zum Lesen von Formen (31) einen digitalen Fotoapparat umfassen.

13. Vorrichtung nach Patentanspruch 11, **dadurch gekennzeichnet, dass** die Mittel zum Analyse von Formen (31) teilweise oder vollständig im Netz verteilt sind.

14. Vorrichtung nach Patentanspruch 11, **dadurch gekennzeichnet, dass** die Mittel zur Zahlung über ein Telekommunikationsnetz vom Typ SMS sind.

15. Vorrichtung nach Patentanspruch 11, **dadurch gekennzeichnet, dass** das Wiederaufladungsterminal (2) eine Schnittstelle mit dem Server (4) zur Aufladung dank traditioneller Kommunikationsmittel zwischen einer Anwendungssoftware und einem Terminal ist.

16. Vorrichtung nach Patentanspruch 11, **dadurch gekennzeichnet, dass** das Wiederaufladungsterminal interaktiv ist.

17. Vorrichtung nach Patentanspruch 11, **dadurch gekennzeichnet, dass** das Wiederaufladungsverwaltungsprogramm (33) Mittel umfasst, die dazu bestimmt sind, eine Information eines von Mitteln zum Lesen von Formen (31) gelesenen Balkencodes in einer für den Wiederaufladungsserver (4) bestimmten SMS - Nachricht zu übertragen.
